# EUROPEAN PATENT APPLICATION

(11) **EP 1 708 078 A1**
(43) Date of publication of application: **04.10.2006**
(21) Application number: 05257382.1
(22) Date of filing: 30.11.2005
(51) Int. Cl.: G06F 3/06, G06F 11/14

(54) **Data relocation method**

(30) Priority: 28.03.2005 JP 2005090459
(71) Applicant: Hitachi, Ltd., Tokyo (JP)
(72) Inventor: Fukuda, Satoshi c/o Hitachi, Ltd., IP Group, Chiyosa-ku, Tokyo 100-8220 (JP); Aoshima, Tatsundo c/o Hitachi, Ltd., IP Group, Chiyosa-ku, Tokyo 100-8220 (JP); Yamakawa, Hiroshi c/o Hitachi, Ltd., IP Group, Chiyosa-ku, Tokyo 100-8220 (JP)
(74) Representative: Hodsdon, Stephen James

(57) **Abstract**

Based on data specified by a client (2), data related to the specified data and relations between the specified data and the related data are retrieved. Next, storage tiers to which the data groups can be relocated and also relations between these data that can be built at the tiers are retrieved. These retrieved data are presented on the screen of the client (2) to allow an administrator to select a storage tier of a relocation destination for the data group and a relation to be built at the tier. The data is then relocated and the relation rebuilt according to the selection made by the administrator.

## Description

The present invention relates to a storage management system and more specifically but not exclusively to data migration method.

Large-capacity storages equipped with low-cost storage devices such as S-ATAs have come onto the market in recent years, increasing a range of variations in characteristics such as storage cost; access speed and reliability. Connecting diversified storages requires a storage administrator to manage various kinds of storage resources and there is a growing call for a method for efficient management of these diversified storage resources.

For example, US2004/0193760 discloses a method for creating a hierarchical structure involving different storages based on characteristics such as storage cost and relocating data to an optimal storage level or tier according to the life cycle and kind of data. The data lifecycle means that accessibility and reliability of data change over time. The use of the method proposed in US2004/0193760 makes it possible to relocate data to an optimal storage tier according to the lifecycle and kind of data, allowing for efficient management of storage resources.

As the usage of storages become more and more complex, a variety of relations occur among a plurality of data stored in storages. Examples of such relations include a backup relation between main data and sub data, in which copies (sub data) are made of important data (main data), and a relation in a database between data areas and index areas.

When main data is relocated or migrated from a storage tier with a fast access speed to a storage tier with a slow access speed according to the life cycle of the data, it is conceived from the standpoint of increased efficiency of storage resources that sub data may be relocated to a storage tier with an even slower access speed than that of the storage tier where the main data is stored.

In that case, if the main data and the sub data are located in the same kind of storages before the relocation operation is performed and, after the relocation operation, they are located in different kinds of storages, a main data/sub data backup method must be changed before and after the data relocation operation because the kind of storages has changed.

As described earlier, for efficient management of storage resources, data needs to be relocated according to the data lifecycle and the relation among data also needs to be modified.

Although US2004/0193760 describes data migration method according to the lifecycle of data, it does not refer to a method of changing relations among data.

An object of this invention is to change relations among data to match the relocation of data.

To preferably achieve the above and other objectives, the data migration method of one aspect of this invention performs the steps of accepting from a client an identifier of data that the client wants relocated, retrieving relevant data associated with the data, determining candidate storage tiers to which these data can be relocated, determining a relation among data that are relocated in these storage tiers, presenting the content thus determined to the client to select a relation between the storage tiers to which the data is to be relocated and the data to be changed, and changing settings of the data according to the selection.

Other objects, features and advantages of the invention will become apparent from the following description of the embodiments of the invention taken in conjunction with the accompanying drawings.
Fig. 1 is a schematic diagram showing a configuration of a storage management system and an outline of processing sequence according to embodiment 1.
Fig. 2 is a flow chart showing a process of retrieving relevant data.
Fig. 3 is a flow chart showing a process of determining a candidate destination to which a data group is to be relocated.
Fig. 4 illustrates a table in a data status DB (database) 40.
Fig. 5 illustrates a table in a data relation DB (database) 41.
Fig. 6 illustrates a table in a relation/tier DB (database) 42.
Fig. 7 illustrates an example screen to select data to be relocated and a destination tier to which the data is to be relocated.
Fig. 8 illustrates an example screen to select a relation between a relocation destination for the data and the source data.
Fig. 9 illustrates an example of screen to make a final check on the data relocation.
Fig. 10 is a schematic diagram showing a configuration of a storage management system and an outline of processing sequence according to embodiment 2.
Fig. 11 is a flow chart showing a relocation policy-based processing.
Fig. 12 illustrates a table in a relocation policy DB (database) 43.
Fig. 13 illustrates an example screen to select data to be relocated and a policy for data relocation.
Fig. 14 illustrates an example screen to make a final check on the data relocation.
Fig. 15 is a schematic diagram showing a configuration of a storage management system and an outline of processing sequence according to embodiment 3.
Fig. 16 illustrates a table in a relocation trigger DB44.
Fig. 17 is a flow chart showing relocation start decision processing.

Now, embodiments of this invention will be described by referring to the accompanying drawings.

### (Embodiment 1)

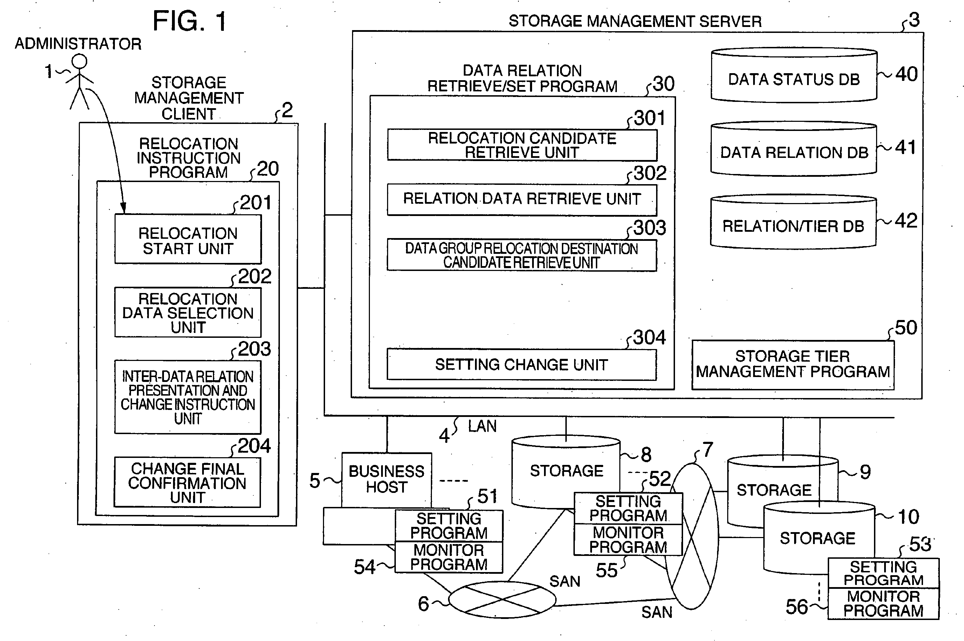

Fig. 1 shows an outline of a configuration of a storage management system and processing sequence of one embodiment of this invention. This system comprises a storage management client 2, a storage management server 3, a business host 5, and storages 8, 9, 10. The storages may include tape devices. These are connected by LAN (local area network) 4. Reference and setting of information are performed among the devices via the LAN 4. The business host 5 and the storages 8, 9, 10 are interconnected by SAN (storage area network) 6 and SAN 7, through which data to be used in business operations are transferred.

The storage management client 2 may, for example, be a personal computer and may include a display for displaying information, an input device such as keyboard and mouse, a storage device such as a hard disk drive, a processor, and an internal memory. In the storage device is installed a relocation instruction program 20. When a migration is demanded, this program 20 is loaded into the internal memory and executed by the processor. The input device is used for input operation about a relocation instruction from an administrator 1. The display shows information about the relocation instruction received from the storage management server 3 to present data on possible relocation candidates to the administrator 1.

The storage management server 3 has a storage device, in which a data relation retrieve/set program 30 and a storage hierarchy management program 50 are stored. These programs are executed by a processor (not shown). Further, in the storage device are created a data status DB (database) 40, a data relation DB 41 and a relation/tier DB 42. Storage formats of these databases DB 40, 41, 42 will be detailed later. Characteristic functions and operations of the data relation retrieve/set program 30 will also be detailed later.

The storage hierarchy management program 50 manages a hierarchical relation among the storages 8, 9, 10 and stores in the data status DB 40 information about tiers to which data belong. The storage hierarchy refers to an aggregate of storages or data storage areas into which a storage is logically partitioned. The storages making up the storage hierarchy are not limited to hard disk drives but may be any kind of storage devices capable of storing data, including tape devices and optical disc devices such as DVD drives.

While in this embodiment the storage management client 2 and the storage management server 3 are implemented on different computers, they may be implemented on the same computer. It is also possible to implement the storage management client 2 and the storage management server 3 on the business host 5 and to perform a storage management while executing business operations.

A flow of processing, from the moment the administrator 1 instructs a data relocation start in the storage management client 2 until the relocation of data is actually completed, will be explained in detail in the order of 201, 301, 202, 302-303, 203-204 and 304 of Fig. 1.

While in this embodiment, volumes are handled as an example of data, this invention is not limited to volumes but can also be applied to files, etc.

The administrator 1 instructs a relocation start to the relocation instruction program 20. A relocation start unit 201 in the relocation instruction program 20 receives the instruction for relocation start and sends it to the data relation retrieve/set program 30. The data relation retrieve/set program 30 transfers the received instruction to a relocation candidate retrieve unit 301.

The relocation candidate retrieve unit 301 retrieves from the storage hierarchy management program 50 a relocatable data candidate and a tier candidate to which the data can be relocated and stores them in the data status DB 40.

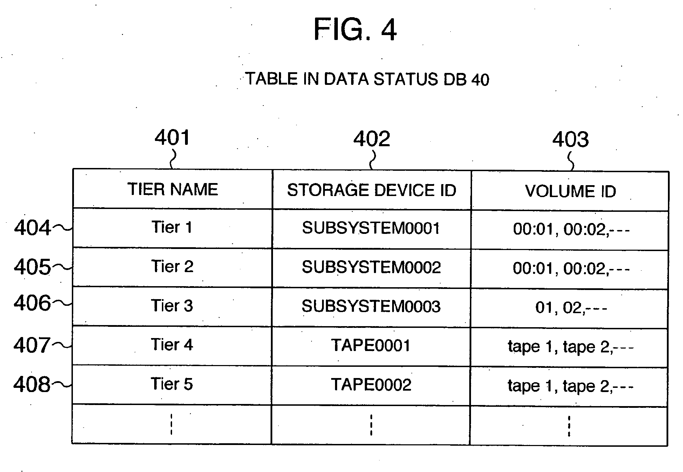

Fig. 4 shows an example of table stored in the data status DB 40. The table includes columns of a tier name 401, a storage device ID 402 and a volume ID 403. In the table, data 404 for instance indicates that volumes 00:01, 00:02, ... in a SUBSYSTEM0001 belong to Tier 1.

The data relation retrieve/set program 30 retrieves data and tier candidates from the data status DB 40 and sends them to the relocation instruction program 20.

The relocation instruction program 20 transfers the received data and tier candidates to a relocation data selection unit 202, which displays the data and tier candidates on the display.

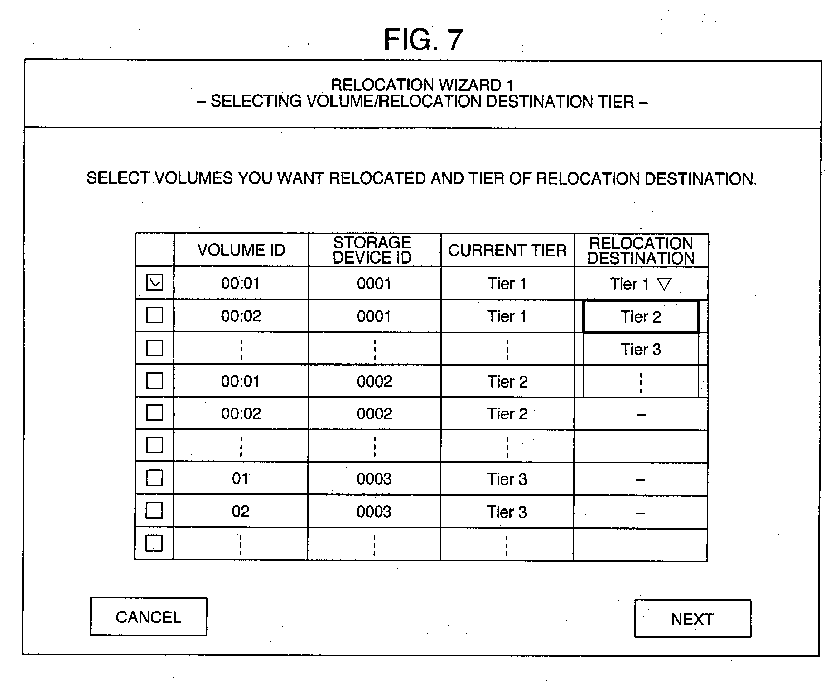

Fig. 7 shows an example screen displaying data and tier candidates. Displayed on the screen are, for each candidate volume, a volume ID representing an ID for identifying a volume, a storage device ID representing an ID of a storage device storing the volume, a current tier representing a tier to which the volume currently belongs, and a relocation destination representing a tier candidate to which the volume can be relocated. The administrator 1 then selects a volume to be relocated and a tier of relocation destination for that volume.

The relocation data selection unit 202 for data to be relocated sends the selected volume and relocation destination tier to the data relation retrieve/set program 30, which then transfers the selected volume to a relation data retrieve unit 302.

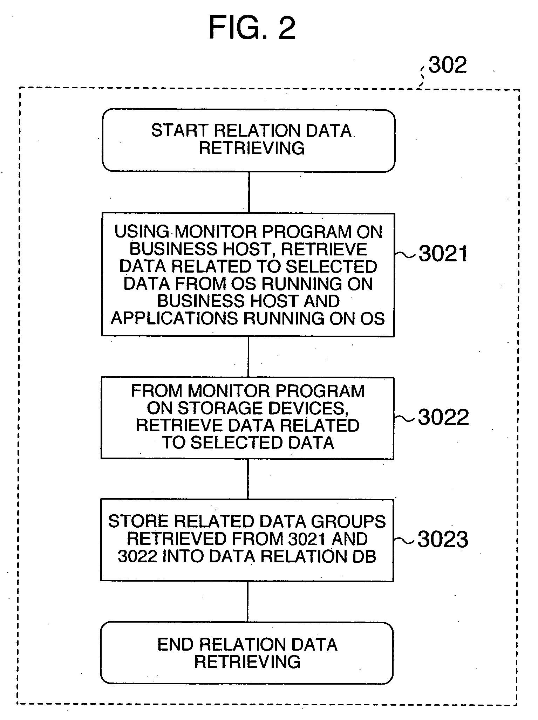

Fig. 2 is a flow chart of the relation data retrieve unit 302. The relation data retrieve unit 302 retrieves volumes related to the selected volume from monitor programs 54, 55, 56. The monitor program 54 retrieves volumes related to the selected volume from OS (operating system) running on the business host and from applications running on the OS. The monitor programs 55, 56 retrieve those related volumes associated with the selected volume, which the storage device recognizes.

All the related volumes retrieved by the monitor programs 54, 55, 56 are called a related data group, and the relation data retrieve unit 302 stores the related data group in the data relation DB 41.

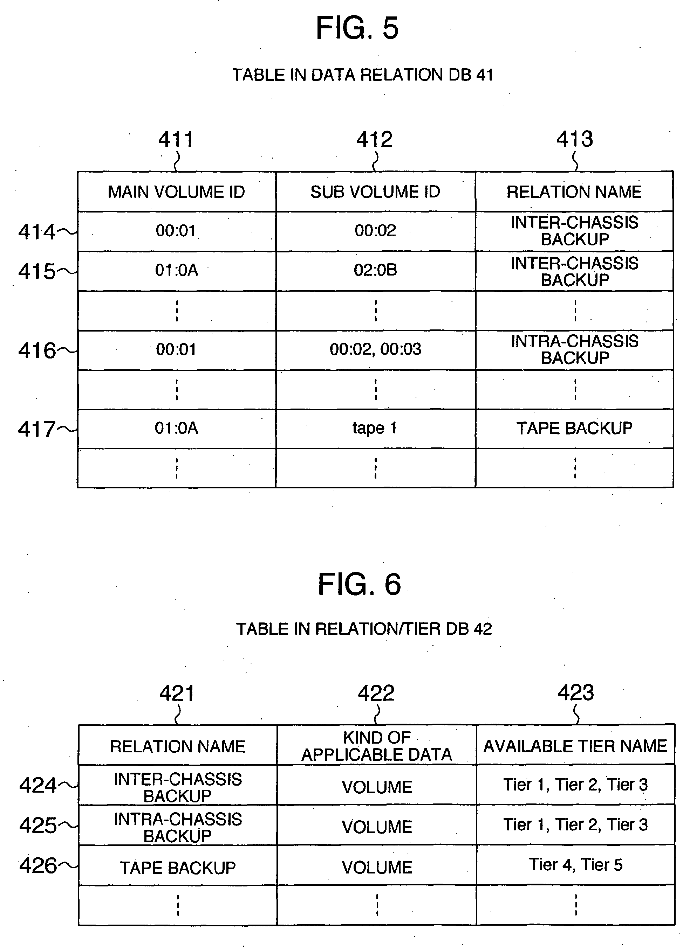

Fig. 5 shows an example of table stored in the data relation DB 41. This table has columns of a main volume ID 411, a sub volume ID 412 and a related name 413. In the table, data 414 for example indicates that 00:01 and 00:02 are related data group and that a relation of inter-chassis backup is built between the main volume of 00:01 and the sub volume of 00:02.

The data relation retrieve/set program 30, after executing the relation data retrieve unit 302, executes a data group relocation destination candidate retrieve unit 303.

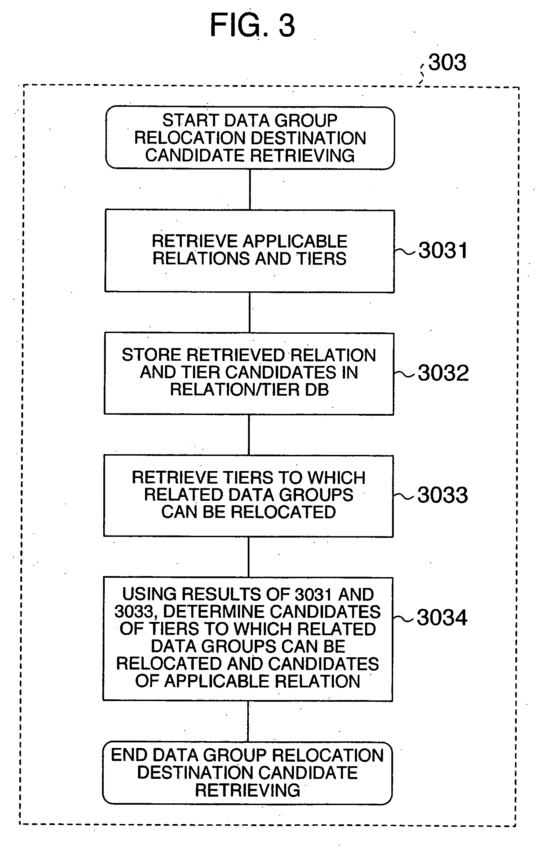

Fig. 3 is a flow chart for the data group relocation destination candidate retrieve unit 303. The data group relocation destination candidate retrieve unit 303 executes an applicable relation/tier retrieve processing 3031 and retrieves applicable relations.

The applicable relation/tier retrieve processing 3031 retrieves from setting programs 51, 52, 53 information about relations that the setting programs 51, 52, 53 can set for data. The information that the processing 3031 retrieves for the related data group are the kinds of relations that the setting programs 51, 52, 53 can set, the kind of data that the setting programs 51, 52, 53 can set, and the tier of data that the setting programs 51, 52, 53 can set.

The data group relocation destination candidate retrieve unit 303, after executing the applicable relation/tier retrieve processing 3031, executes processing 3032 for storing the determined relation and tier candidates in the relation/tier DB.

The processing 3032 for storing the determined relation and tier candidates in the relation/tier DB stores the result retrieved by the applicable relation/tier retrieve processing 3031 in the relation/tier DB 42.

Fig. 6 shows an example of table stored in the relation/tier DB 42. The table has columns of a related name 421, an applicable data kind 422, and a usable tier name 423. In this table, data 424 for example indicates that the inter-chassis backup relation can be set for the volumes on tiers Tier1, Tier2, Tier3.

The data group relocation destination candidate retrieve unit 303, after executing the applicable relation/tier retrieve processing 3031, retrieves a related data group from the data relation DB 41 and executes processing 3033 to retrieve tiers to which the related data group can be relocated. The processing 3033 for retrieving tiers to which the related data group can be relocated retrieves from the storage hierarchy management program 50 tiers to which the data can be relocated. This processing is repeated the same number of times as the number of the related data groups.

The data group relocation destination candidate retrieve unit 303, after executing the processing 3033 for retrieving tiers to which the related data group can be relocated, executes processing 3034 for determining candidate tiers to which the related data group can be moved and applicable relations, by using the results of the processing 3031 and the processing 3033.

The processing 3034 for determining tiers to which the related data group can be moved and applicable relations by using the results of the processing 3031 and the processing 3033 determines candidate tiers and applicable relations based on the result of the processing 3031 for retrieving relation and tier applicable to the related data group and the processing 3033 for retrieving tiers to which the related data group can be relocated. The tiers to which the related data group can be relocated are determined from the result of the processing 3033 for retrieving tiers to which the relocated data group can be relocated and then the relations applicable to these tiers are determined from the relation/tier DB 42.

The data relation retrieve/set program 30 sends the relations and tiers determined by the data group relocation destination candidate retrieve unit 303 to the relocation instruction program 20.

The relocation instruction program 20 transfers the relations and tiers received from the data relation retrieve/set program 30 to inter-data relation presentation and change instruction unit 203. The change instruction unit 203 displays the relations and tiers on the screen.

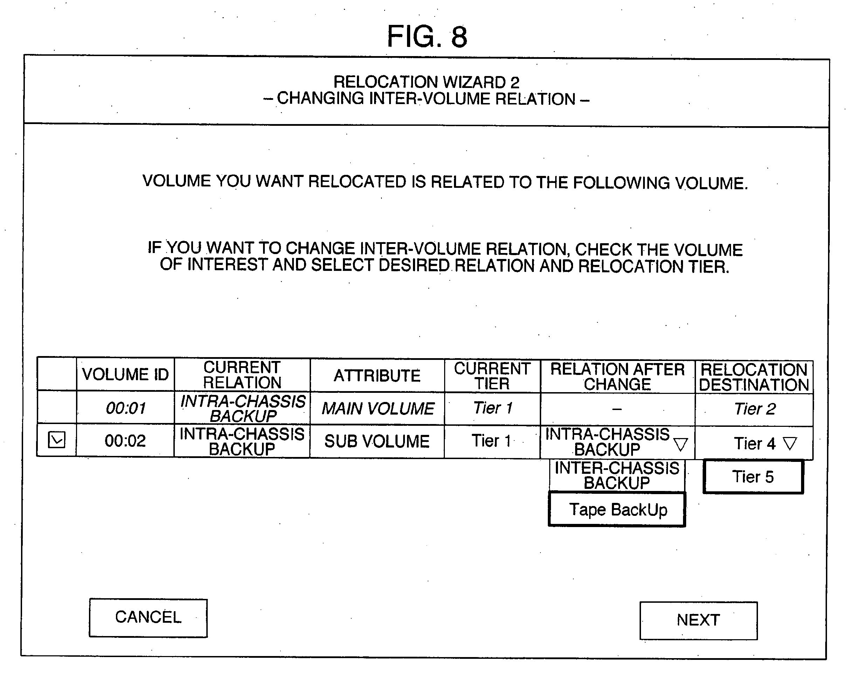

Fig. 8 shows an example of screen displaying relations and tiers. The screen shows volumes that the administrator 1 has selected in the relocation data selection unit 202 and volumes related to those volumes. Displayed on the screen are, for each volume, a volume ID representing an ID of the volume, a current relation representing a relation that the selected volume has with the related volume, an attribute representing an attribute of each volume in that relation, a current tier representing a tier to which each volume currently belongs, a changed relation representing a relation between changeable volumes, and a relocation destination representing tiers to which the volume can be relocated. On this screen, the administrator 1 can select the relation between volumes and a tier to which the related volume is to be relocated.

The relocation instruction program 20 transfers a content of instruction which the administrator 1 has made in the inter-data relation presentation and change instruction unit 203 to a change final confirmation unit 204.

The change final confirmation unit 204 displays on the screen the content of change that the administrator 1 has instructed in the relocation data selection unit 202 and the inter-data relation presentation and change instruction unit 203.

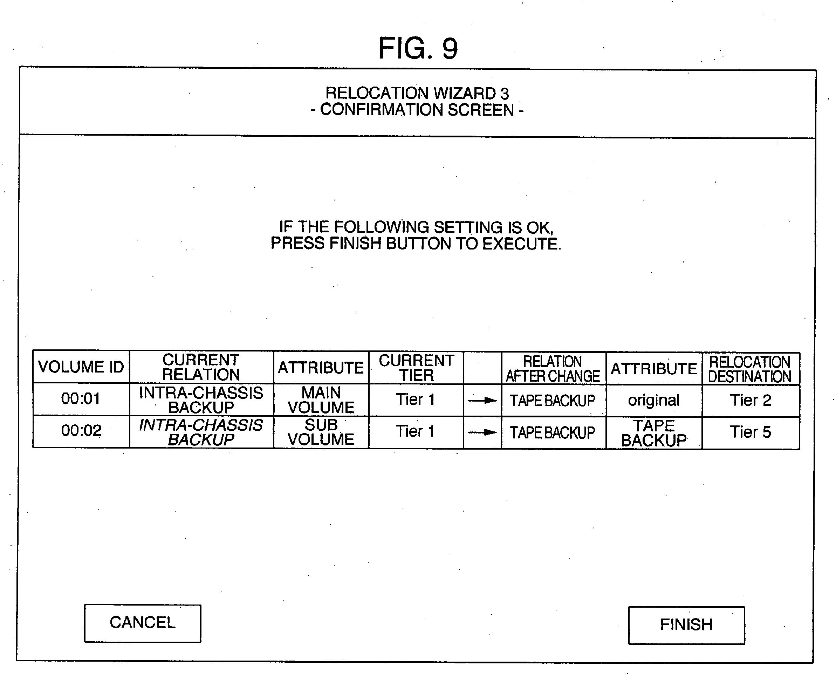

Fig. 9 shows an example of screen displaying changed relations and tiers of relocation destinations. Displayed on the screen are volume IDs representing a volume the administrator 1 has selected and a volume related to the selected volume, current relations representing present relations between volumes, attributes representing an attribute of each volume, current tiers to which volumes belong, changed relations representing relations between volumes after change, attributes of volumes in the changed relations, and relocation destinations representing tiers to which the volumes belong after change.

Upon receiving the final confirmation made by the administrator 1 in the change final confirmation unit 204, the relocation instruction program 20 sends a setting change instruction to the data relation retrieve/set program 30. The data relation retrieve/set program 30 transfers the received setting change instruction to a setting change unit 304.

The setting change unit 304, according to the setting change instruction, causes the setting programs 51, 52, 53 to cancel the relations created between data. At this time, if the instruction by the administrator 1 concerns only the relocation of volumes and the relation between data remains unchanged, the relation built among the data is not cancelled. After the relation is canceled, the setting change unit 304 causes the storage hierarchy management program 50 to execute the volume relocation as setting change instruction. After the relocation is completed, the setting change unit 304 causes the setting programs 51, 52, 53 to build inter-data relations according to the setting change instruction. While Fig. 7, Fig. 8 and Fig. 9 show examples of relations implemented on the GUI, the implementation of this invention is not limited to the GUI. An example of implementing this invention by command lines follows. When command lines are used, the relocation data selection unit 202 displays volume candidates by command lines. The administrator 1 selects from among the displayed volume candidates the one he or she wants relocated. Upon selection of the volume, the relocation data selection unit 202 displays by command lines tiers to which the volume can be relocated. The administrator 1 chooses from the displayed relocatable tiers the one to which he wants the volume to be relocated. The inter-data relation presentation and change instruction unit 203 displays by command lines volumes related to the volume selected by the administrator 1. The administrator 1 selects a relation between the selected volume and the related volume. The inter-data relation presentation and change instruction unit 203 displays by command lines tiers of relocation destinations of the related volume that can realize the selected relation. Then the administrator 1 selects a tier of relocation destination of the related volume.

### (Embodiment 2)

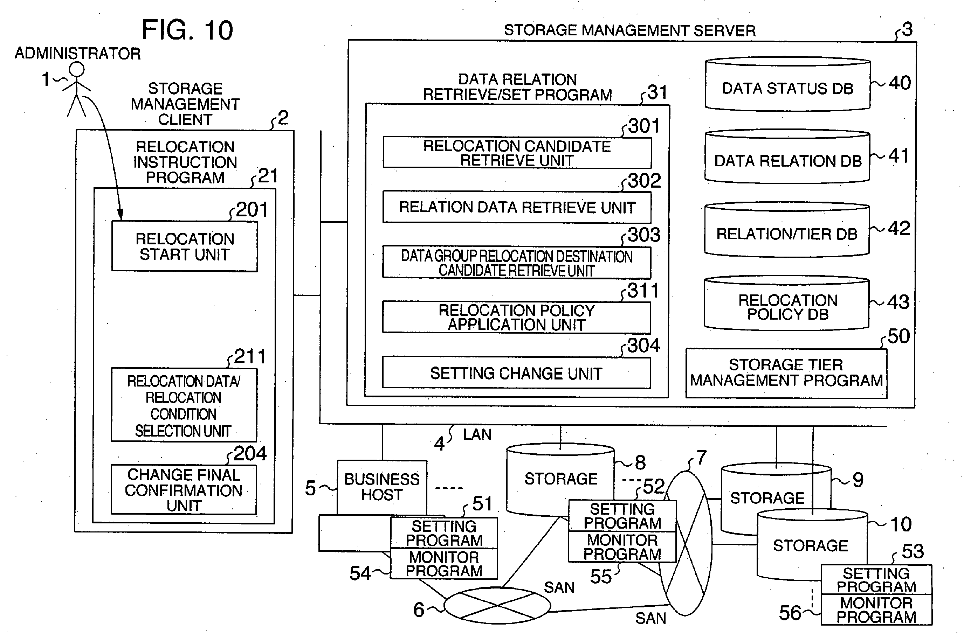

Referring to Fig. 10, a second embodiment of this invention will be described. The following embodiments including this embodiment are equivalent to variations of the second embodiment. The feature of this embodiment lies in the fact that the inter-data relation presentation and change instruction unit 203 is summarized in a policy in a relocation policy DB 43. The first embodiment, when instructing data relocation, allows the administrator 1 to specify the relocation destination of data related to the selected data and the relation between the selected data and the related data. In this embodiment, the relocation destination of data related to the selected data and the relation between the selected data and the related data are stored in advance in the relocation policy DB 43. With this arrangement, what needs to be done in instructing the data relocation is only specifying a relocation policy name, thus reducing a burden on the administrator 1.

This embodiment differs from the embodiment 1 in that the internal processing of the relocation instruction program and the data relation retrieve/set program are changed and that the relocation policy DB 43 is added. In a relocation instruction program 21 of this embodiment, the relocation data selection unit 202 and the inter-data relation presentation and change instruction unit 203 in the relocation instruction program 20 of the embodiment 1 are changed into a relocation data/relocation condition selection unit 211. A data relation retrieve/set program 31 of this embodiment is equivalent to a relocation policy application unit 311 added to the data relation retrieve/set program 30 of the embodiment 1.

Those processing that are different between the embodiment 1 and this embodiment will be explained by referring to the drawings. In this embodiment, explanations will be given in the order of 201, 301-303, 311, 211, 204, and 304 in Fig. 10.

Processing from the relocation start unit 201, the relocation candidate retrieve unit 301 and the relation data retrieve unit 302 up to the data group relocation destination candidate retrieve unit 303 are performed to retrieve relocatable data, data related to the relocatable data, relocation destination candidates of these data groups, and relations applicable to the relocation destination candidates.

After the processing up to this point has been executed, the relocation policy application unit 311 is executed.

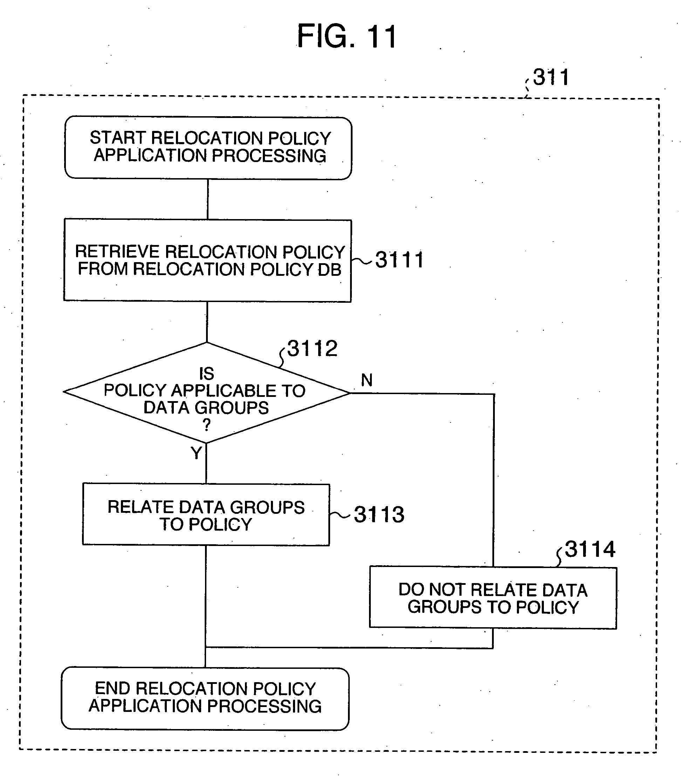

Fig. 11 is a flow chart of the relocation policy application unit 311. The relocation policy application unit 311 retrieves a relocation policy from the relocation policy DB 43. Next, information on the data groups obtained by the processing up to the data group relocation destination candidate retrieve unit 303 is compared against the content of the relocation policy to check if the relocation policy can be applied to each data group. If found applicable, the policy is associated with the data groups. If not applicable, the policy is not matched to the data groups.

A method of determining whether the relocation policy is applicable to the data groups will be explained as follows.

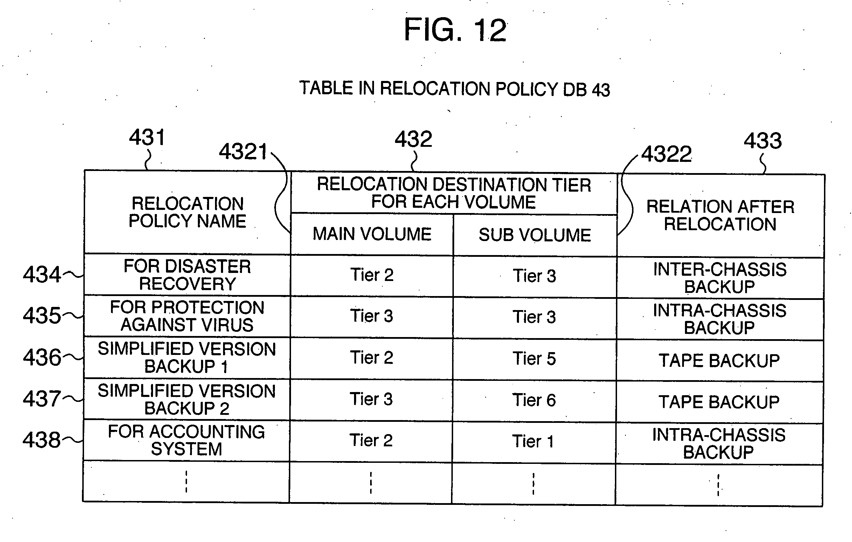

Fig. 12 shows an example of table stored in the relocation policy DB 43. The table comprises columns of a relocation policy name 431, a relocation destination tier for each volume 432 and a relation after relocation 433. The relocation destination tier for each volume 432 is further divided into a main volume 4321 and a sub volume 4322. In the table, data 434 for example indicates that a relocation policy name is "For disaster recovery", that a relocation destination tier for the main volume is Tier2, that a relocation destination tier for the sub volume is Tier3, and that the relation created after relocation is an inter-chassis backup. Although the main volume and the sub volume have different relocation destination tiers in this example, the relocation destination tiers of the main and sub volumes may be the same as in the example of data 435 in the table.

If the relocation destination tier of each volume and the relation after relocation, obtained from the relocation policy, are included in the information about the relocation destination candidate obtained from data groups, the relocation policy can be applied to the data groups, so the policy is related to the data groups. When they are not included, the relocation policy cannot be applied, so the policy is not related to the data groups.

The data relation retrieve/set program 31 sends to the relocation instruction program 21 the data groups obtained by the processing up to this point and the relocation policy related to the data groups. The relocation instruction program 21 transfers the received information to the relocation data/relocation condition selection unit 211 for display on the screen.

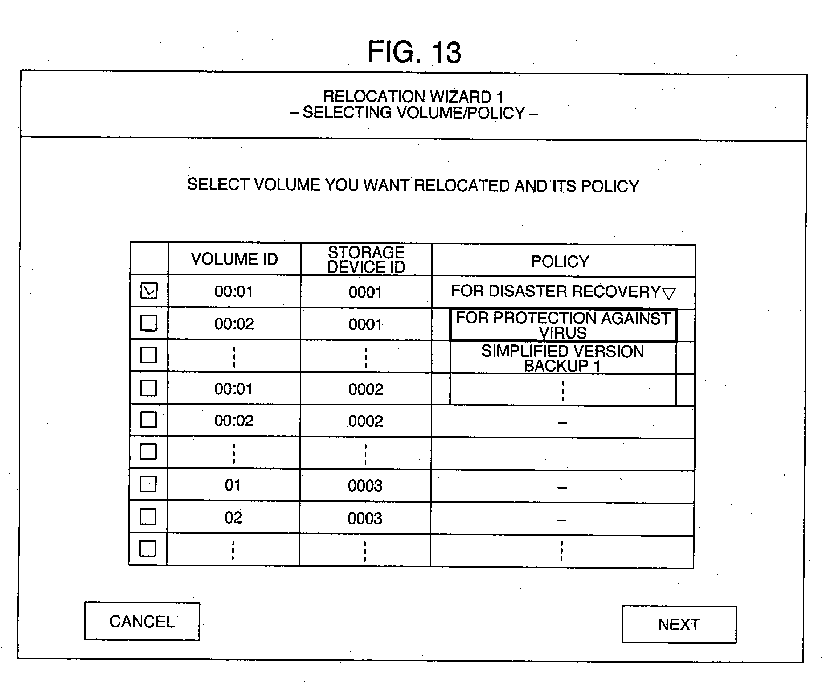

Fig. 13 shows an example of screen displaying data groups and relocation policies related to the data groups. Displayed on the screen are volume IDs representing IDs of relocatable volumes, storage device IDs representing IDs of storage devices to which the volumes belong, and policies representing relocation policies that can be selected when relocating the volumes.

The administrator 1 selects a volume he wants relocated and a relocation policy used when relocating the volume. For those data groups to which relocation policies are not assigned by the relocation policy application unit 311, a relocation policy cannot be selected.

The relocation data/relocation condition selection unit 211 extracts from the information received from the data relation retrieve/set program 31 volumes related to the volume selected by the user, and the relocation destination tier of each volume and relations applied to the relocation destination tiers based on the relocation policy selected by the user and then transfers these to the change final confirmation unit 204.

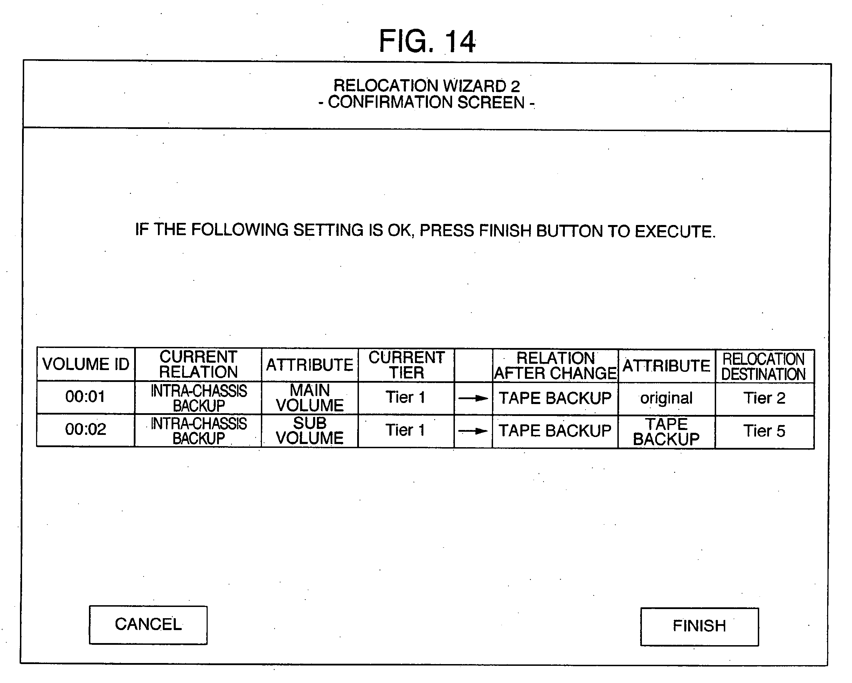

Fig. 14 shows an example screen displaying relations after change and relocation destination tiers. Displayed on the screen are the volumes selected by the administrator 1 and information determined from the relocation policy. Information displayed includes volume IDs representing IDs of the volume selected by the administrator 1 and a volume related to the selected volume, current relations representing present relations between the volumes, attributes representing those of the volumes, current tiers to which the volumes belong, changed relations representing relations between the volumes after change, attributes of the volumes in the changed relations, and relocation destinations representing the tiers to which the volumes belong after change.

Processing executed following the change final confirmation unit 204 is similar to that of embodiment 1. As in embodiment 1, the implementation of this invention is not limited to GUI.

### (Embodiment 3)

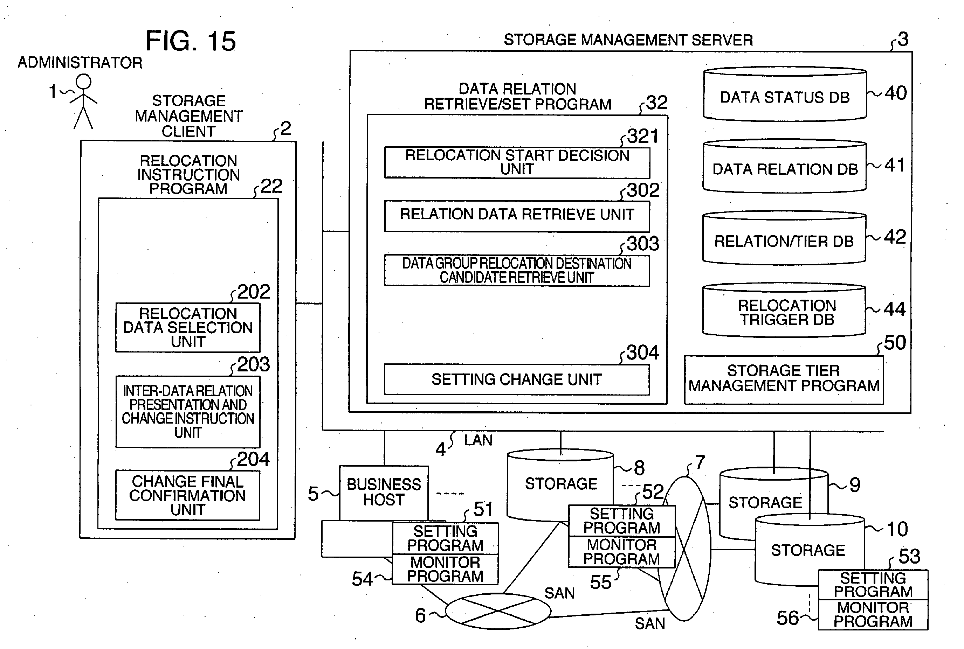

Referring to Fig. 15, a third embodiment of this invention will be described. This embodiment is characterized in that the relocation start unit 201 described in the first embodiment is summarized in a relocation start decision unit 321. In the first embodiment the data relocation is initiated by the instruction from the administrator 1. In this embodiment, a condition as a trigger for the relocation is stored in advance in a relocation trigger DB 44 and the relocation start decision unit 321 makes a decision at all times or periodically as to whether the relocation trigger is satisfied and prompts the user to initiate the relocation according to the result of decision. Therefore, there is no need for the administrator 1 to make an instruction to initiate the relocation, reducing a burden on the administrator 1.

This embodiment differs from the embodiment 1 in that internal processing of the relocation instruction program and the data relation retrieve/set program are changed and that the relocation trigger DB 44 is added. In a relocation instruction program 21 of this embodiment, the relocation start unit 201 in the relocation instruction program 20 of the embodiment 1 is eliminated. In the data relation retrieve/set program 31 of this embodiment, the relocation candidate retrieve unit 301 in the data relation retrieve/set program 30 of the embodiment 1 is changed into the relocation start decision unit 321.

Those processing that are different between the embodiment 1 and this embodiment will be explained by referring to the drawings. In this embodiment, processing will be explained in the order of 321, 202, 302-303, 203-204 and 304 in Fig. 15.

The following explanation concerns a case where a business host user (not shown), after reading a mail on the business host, attempts to relocate a volume containing the mail data.

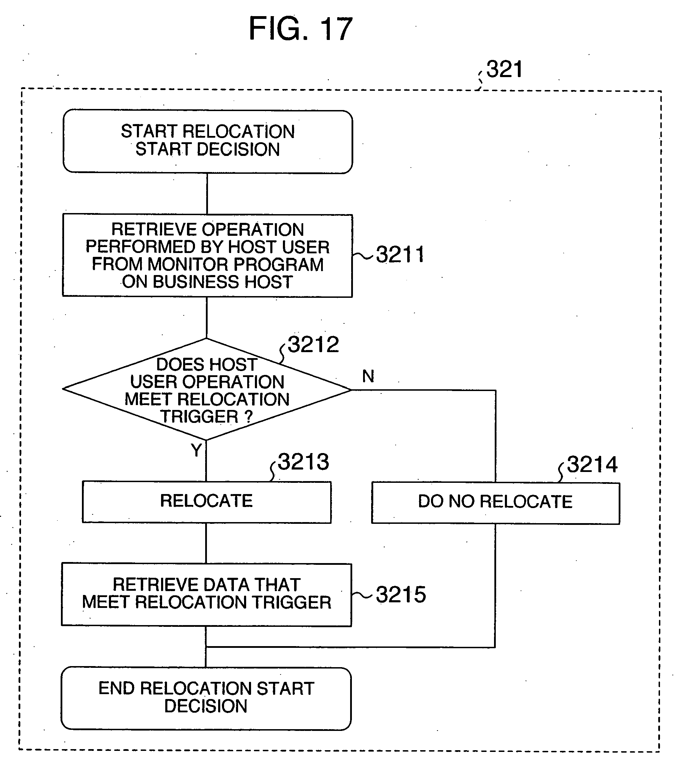

Fig. 17 is a flow chart for the relocation start decision unit 321. The relocation start decision unit 321 retrieves an operation made by the host user from the monitor program 54 on the business host at all times or periodically. Next, the unit checks whether the retrieved operation done by the host user meets the relocation trigger. The decision as to whether the relocation trigger is met is made by checking the operation made by the host user against the information in the relocation trigger DB 44.

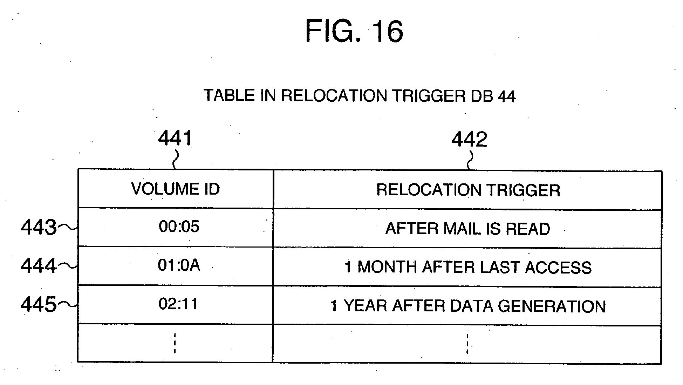

Fig. 16 shows an example of table stored in the relocation trigger DB 44. This table comprises columns of a volume ID 441 and a relocation trigger 442.

In the table, data 443 for example indicates that the relocation trigger is put immediately after the mail has been read and that the data to be relocated at this trigger is a volume 00:05.

When the relocation trigger is met, data satisfying the relocation trigger is retrieved from the relocation trigger DB 44 and relocation processing is initiated. If the relocation trigger is not satisfied, the relocation processing is not initiated. For those data which include a time specification for the relocation trigger, as in data 444 in the table, the relocation start decision unit 321 is executed after the specified time elapses.

When the relocation processing is initiated, a data relation retrieve/set program 32 sends data to be relocated to the relocation instruction program 22.

The relocation instruction program 22 transfers the received data to be relocated to the relocation data selection unit 202.

Processing executed following the relocation data selection unit 202 is similar to that of embodiment 1.

Although in this embodiment a backup relation between main data and sub data has been taken up as an example to explain about the data relocation to different storage tiers and about the necessity for changing the relation between data, this invention is not limited to the backup relation between main and sub data but can be applied also to relations between data areas/index areas in database and other various data relations. As in the embodiment 1, the implementation of this invention is not limited to GUI.

Embodiments of this invention allow data relations to be changed in compliance with data relocations being executed. Therefore, data can be relocated by considering relations between data as well as lifecycles and kinds of data, allowing for more efficient management of storage resources than is possible with the conventional technologies.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A data migration method in a storage management system wherein the storage management system includes a storage management server (3) and a storage management client (2) for managing operations of storages and business hosts (5); the data migration method comprising the steps of:
in the storage management client (2), specifying data to be relocated and a storage tier of a relocation destination;
in the storage management server (3), extracting data related to the data and determining candidates of storage tiers to which the related data can be relocated; and
in the storage management client (2), presenting the related data and the candidates of storage tiers as the relocation destinations, both determined by the storage management server (3), receiving the related data and creating information about the relocation of the related data in response to a selection of the storage tier as a relocation destination and related data.

2. A data migration method according to claim 1, wherein a decision is made in the storage management server (3) as to whether a data relocation is necessary and, if it is decided that the relocation is required, the steps in claim 1 are executed.

3. A data migration method in a storage management system wherein the storage management system manages operations of a plurality of storage devices (8, 9, 10) and business hosts (5) interconnected via networks by using a storage management server (3); the data migration method comprising the steps of:
accepting an identifier of data specified by a storage management client (2) via networks;
retrieving identifiers of data related to the data;
determining candidates of storage tiers to which the data and the related data can be relocated and candidates of applicable relations;
sending to the storage management client the identifiers of the related data, the candidates of storage tiers and the candidates of relations;
in the storage management client (2), creating data relocation information and sending the created data relocation information to the storage management server (3) in selecting specific candidates from the received information; and
making settings in the storage devices (8, 9, 10) and the business hosts (5) according to the received data relocation information.

4. A data migration method according to claim 3, wherein the step of making settings in the storage devices (8, 9, 10) and the business hosts (5) sets a backup relation between the relocated data and the related data.

5. A data migration method according to claim 4, wherein the storage management server (3) makes a decision as to whether a data relocation is necessary and, if it is decided that the relocation is necessary, the steps in claim 4 are executed.

6. A data migration method according to claim 5, wherein, when a decision is made as to whether the data relocation is necessary, operations performed by a user of the business hosts (5) are monitored to detect a data change to determine whether the data relocation is necessary.

7. A data migration method according to claim 5 or claim 6, wherein a predetermined time after the step for determining whether the data relocation is necessary has been executed, a decision as to whether the data relocation is necessary is made again.

8. A volume migration method in a storage management system wherein the storage management system includes a storage management server (3) and a storage management client (2) for managing operations of storages and business hosts (5); the volume migration method comprising the steps of:
in the storage management client (2), specifying a main volume to be relocated and a storage tier of a relocation destination;
accepting in the storage management server (3) an identifier of the main volume specified by the storage management client via networks;
in the storage management server (3), extracting a sub volume of the main volume from the storage devices, storing the sub volume in a data relation database, retrieving inter-volume relations capable of backup and storage tiers, storing the received inter volume relations and storage tiers in a relation and tier database, and determining from the inter-volume relation capable of backup and the storage tiers candidates of storage tiers to which the sub volumes can be relocated and candidates of relations capable of backup;
sending to the storage management client (2) an identifier of the sub volume, candidates of storage tiers and candidates of relations capable of backup;
in the storage management client (2), creating relocation information on the sub volume and sending the created relocation information to the storage management server in selecting specific candidates from the received information; and
in the storage management server (3), setting relocation information in the storage devices (8, 9, 10) and the business hosts (5) according to the received relocation information on the main volume and the sub volume.

9. A data migration method in a storage device-based system wherein the storage device-based system has storage devices (8, 9, 10) and business hosts (5); the data migration method comprising the steps of:
specifying data to be relocated and a storage tier of a relocation destination;
extracting data related to the data to be relocated and determining candidates of storage tiers to which the related data can be relocated; and
presenting candidates of storage tiers to which the related data can be relocated and creating information for relocating the related data in response to a selection of a storage tier as the relocation destination.

10. A data migration method in a storage device-based system wherein the storage device-based system has storage devices (8, 9, 10) and business hosts (5); the data migration method comprising the steps of:
specifying a relocation of data;
extracting data related to the data to be relocated, determining candidates of relocatable data and candidates of relocatable storage tiers, and retrieving a data relocation policy conforming to the data migration method; and
presenting candidates of relocatable data and candidates of relocation policy and creating information for relocating the related data in response to a selection of data to be relocated and a relocation policy.

11. A data migration method comprising the steps of:
making a decision as to whether a data relocation is necessary and, if it is decided that the relocation is necessary, executing the steps in claim 10.

12. A storage management system using a storage management server (3) to manage operations of a plurality of storage devices (8, 9, 10) and business hosts (5) interconnected via networks, the storage management system comprising:
a means for accepting an identifier of data specified by a storage management client (2) via networks;
a means for retrieving an identifier of data related to the specified data;
a means for determining candidates of storage tiers to which the data and the related data can be relocated and candidates of applicable relations;
a means for sending to the storage management client (2) the identifier of the related data, candidates of storage tiers and candidates of relations;
a means in the storage management client (2) for creating data relocation information and sending the data relocation information to the storage management server (3) in selecting specific candidates from the received information; and
a means for making settings in the storage devices (8, 9, 10) and the business hosts (5) according to the received data relocation information.

13. A storage management system using a storage management server (3) to manage operations of a plurality of storage devices (8, 9, 10) and business hosts (5) interconnected via networks, the storage management system comprising:
a means for retrieving identifiers of candidate data to be relocated;
a means for retrieving identifiers of data related to the data to be relocated;
a means for determining candidates of storage tiers to which the relocatable data and the related data can be relocated and candidates of applicable relations;
a means for retrieving a data relocation policy conforming to the data migration method;
a means for sending to the storage management client (2) identifiers of the relocatable data and the related data, candidates of the storage tiers, candidates of relations, and the data relocation policy;
a means in the storage management client (2) for selecting the data to be relocated and the relocation policy from the received information and sending the selected data and the relocation policy to the storage management server (3); and
a means for making settings in the storage devices (8, 9, 10) and the business hosts (5) according to the received data relocation information.

14. A storage management system according to claim 12, further including a means in the storage management server (3) to determine whether a data relocation is necessary;
wherein, if it is decided that the relocation is necessary, all the means in claim 12 are executed.

15. A storage management system according to claim 14, further including a means to monitor operations performed by a user of the business hosts (5) and detect a data change to make a decision as to whether the data relocation is required.

16. A storage management system according to claim 14 or claim 15, further including a means to make a decision as to whether a data relocation is necessary and, a predetermined time later, make decision as to whether a data relocation is necessary again.
